# EUROPEAN PATENT SPECIFICATION

(11) **EP 1 575 856 B1**
(45) Date of publication and mention of the grant of the patent: **22.08.2007**
(21) Application number: 03776130.1
(22) Date of filing: 28.11.2003
(51) Int. Cl.: B65G 69/00, E04H 6/42

(54) **DEVICE FOR WARNING AND PROTECTION**
WARN- UND SCHUTZVORRICHTUNG
DISPOSITIF D'AVERTISSEMENT ET DE PROTECTION

(30) Priority: 28.11.2002 SE 0203522
(43) Date of publication of application: 21.09.2005
(73) Proprietor: Garageguard AB, 181 65 Lidingö (SE)
(72) Inventor: Holzmann, Peter, 181 65 Lidingö (SE)
(74) Representative: Karlsson, Leif Karl Gunnar
(86) International application number: PCT/SE2003/001854
(87) International publication number: WO 2004/048237

(56) References cited:
- DE-A1- 2 844 428
- DE-C1- 19 604 963
- FR-A1- 2 837 907

## Description

### Field of invention

The present invention consists of a device for warning for physical contact of vehicles with solid objects in its surrounding, as walls, pillars etc., and protection of the vehicle in case of contact, comprising a detecting unit and a warning unit. The detecting unit is adapted to be attached to a surface and detect a contact of a vehicle with the detecting unit, and the warning unit is adapted to warn a driver of said vehicle at said detection.

### Description of the background art

Different means of aid for handling vehicles in narrow spaces are previously known. Those can somewhat simplified be called run-into warning devices and with this should be understood that they are adapted to situations where a vehicle manoeuvres in narrow spaces with a very low speed in connection with e.g. parking, backing up to loading docks etc. There exists in connection with traffic also run-into protections that are adapted to catch vehicles at high speed to minimize damage in connection with accidents. It shall be understood that the invention at hand is of the first sort of run-into warning devices and that run-into means vehicles running into objects at low speed.

This type of run-into warning devices can be divided into different categories.

There exist different devices adapted to help visually in connection with parking.

Publication US 2002/0041239 shows a system where a display shows the position of the vehicle in relation to the space that shall be used for parking.

Publication DE 201 11 974 shows an arrangement of mirrors that provides the driver of a vehicle with a view of the distance between the vehicle and a wall that the vehicle approaches.

There exist also several active distance-warning devices. Those are adapted to measure the distance from a vehicle to surrounding objects and actively warn the driver when the vehicle comes to close to some object. Those types of systems are shown among others in the publications US 6 326 887, US 5 208 586, DE 100 12 788, WO 92/18879 and FR 2 452 721.

There are also a number of known systems based on to physically constitute an obstacle for the tire of a vehicle, where the driver feels this obstacle and stops the vehicle before the driver runs into an object. Those types of systems are shown among others in the publications US 4 641 994, DE 297 19 117, JP 2001-262857 and GB 2 361 752.

There are also systems building on that a device in some way detects a running-into and shows a warning signal to the driver. All of them are adapted to running into them straight from the front, this means in the last phase of a parking e.g. when the driver wants to come as close as possible to a wall with the vehicle. Those types of systems are shown in the publications DE 196 04 963, US 3 261 321, EP 0 014 726, DE 28 44 428, WO 99/27510, US 3 621 807, US 3 977 354 and US 3 820 065.

There are also a number of publications that show how a vehicle is protected mechanically in a garage, those publications show different elastic resistances that are placed in a garage to protect a vehicle when running-into it. Examples of such publications are US 1 496 626, FR 2 773 376, DE 299 16 563 and US 4 161 853.

Finally it is also known to use devices that are adapted to avoid damage of a vehicle at a run-into and at the same time warn the driver.

The publication DE 28 45 683 shows an air-filled rubber cushion where the air in the cushion is pressed out through a whistle when the cushion is subject to compression.

The publication US 3 416 484 shows a device that is adapted to be put around pillars and poles, where an external casing can rotate at a running-into it and where a sound is generated at the rotation of the external casing.

A device according to the preamble of claim 1 is known from DE 19604963C.

### Summary of the present invention

### Problems

Starting with a device for warning at physical contact of vehicles with solid objects in the surrounding and protection of the vehicle at such contact, consisting of a detecting unit and a warning unit, where the detecting unit is adapted to be attached to a surface and detect a contact of a vehicle with the detecting unit, and where the warning unit is adapted to warn a driver of the vehicle at the detection, is it a technical problem to provide a device that easily can be attached to different surfaces, flat as well as e.g. cylindrical surfaces or corners,

It is a technical problem to provide a device that as well warns the driver as protects the vehicle that is running into an object.

It is further on a problem to be able to provide a device that warn not only if the running-into occurs straight from the front against the surface on which the device is attached but also a running-into where the vehicle only touches the device in a direction that is almost parallel with the surface to which the device is attached.

It is a technical problem to be able to provide a device that easily can be adapted to different sizes and different applications, such as for small garages for private cars, parking houses or loading docks for heavy vehicles.

It is a problem to be able to provide a detecting unit that can notice where on the detecting unit the contact has occurred and to indicate this position on the warning unit.

### Solution

With the intention to solve one or several of the problems specified above, and with starting-point from a device for warning at physical contact of vehicles and protection of the vehicle at such a contact, comprising a detecting unit and a warning unit, where the detecting unit is adapted to be attached to a surface and detect contact with a vehicle against the detecting unit, and where the warning unit is adapted to warn the driver of the vehicle at the detection, the present invention teaches that the detecting unit comprises a force-absorbing plate, and a with this plate cooperating contact device, where a first side of the plate is adapted to be attached to the surface.

With the intention to protect the running-into vehicle the present invention indicate that the plate is given an elasticity adapted to be able to absorb a part of the forces that can occur at contact with the vehicle.

Further the present invention shows that the contact device is adapted to close an electric circuit at the contact, and that the warning unit is adapted to give a visual signal and/or an acoustic signal when the electric circuit is closed.

According to the present invention the contact device can consist of different types of electric closed circuits, such as e.g. an elastic material that is isolating at normal pressure and is electrically conductive when it is exposed to external pressure or a traditional mechanic contact that is open at normal pressure and closed when exposed to external pressure.

The sensitivity to pressure and elasticity of the detecting unit makes that it also easily can detect a contact of a vehicle that runs into the detecting unit in a direction that is almost parallel with the surface on which the detecting unit is attached, and this without the on-running vehicle being damaged by the contact with the detecting unit.

With the intention not only to be able to indicate that a contact has occurred against a detecting unit but also to point out where on the detecting unit the contact has taken place the present invention teaches that the detecting unit comprises several cooperating contact devices and that those contact devices are positioned in a pattern, such as in a row, or several rows or columns, where the contact devices are electrically connected to different electrical circuits in a way that makes it possible to detect which one of the contact devices that closes an electrical circuit, where the warning unit is adapted to show where on the detecting unit a physical contact has taken place.

With the intention to provide a detecting unit that can be attached to others than flat surfaces the present invention shows that the plate and all or parts of it are provided with one or more notches, placed towards the first side, whereby the detecting unit is adapted to be bent around and attached to not flat surfaces, such as pillars, poles or corners.

It is also possible to make the plat bendable, so that the detecting unit is adapted to be attached to not flat surfaces, such as pillars, poles or corners.

It is further on possible to make the plate in the shape of an angle, whereby the detecting unit is adjusted to be attached around a corner.

With the intention to protect the running-into vehicle the present invention teaches that the total elasticity of the detecting unit is adapted to be able to absorb a part of the forces that can occur at the contact of a vehicle, and that the warning unit is adapted to give a warning signal at such a contact, in a way so that the driver of the vehicle can observe the warning signal before the forces have a damaging influence on the vehicle.

According to the present invention the warning unit may stand in electrical connection with the detecting unit. But there is nothing that prevents that the warning unit stands in wireless connection with the detecting unit hereby making the device more adaptable to different situations. It is e.g. then possible to let the warning device be placed inside a vehicle.

### Advantages

The most important advantages connected with the present invention is that a devise according to the invention is simple and inexpensive to produce, it is simple to place in different environments, it can be attached to plane surfaces as well as to pillars, poles, corners or other non-flat surfaces, and it can be adapted to light private cars as well as to heavier vehicles.

### Brief description of the drawings.

A device according to the present invention will now be described in detail with reference to the accompanying drawings, in which:
- Figure 1: schematically and very simplified shows a device according to the present invention,
- Figure 2: schematically shows a first embodiment of a contact device,
- Figure 3: schematically shows a second embodiment of a contact device,
- Figure 4 a and b: schematically shows different contact bodies in a contact device aiming to giving a contact device springy or elastic properties,
- Figure 5: schematically shows a detecting unit with a number of cooperating contact devices,
- Figure 6: schematically shows a detecting unit adapted to be attached to rounded surfaces, such as pillars or poles,
- Figure 7: schematically shows a detecting unit adapted to be attached around a corner, and
- Figure 8: schematically shows a device with a wireless communication between the detecting unit and the warning unit.

### Description of embodiments as presently preferred

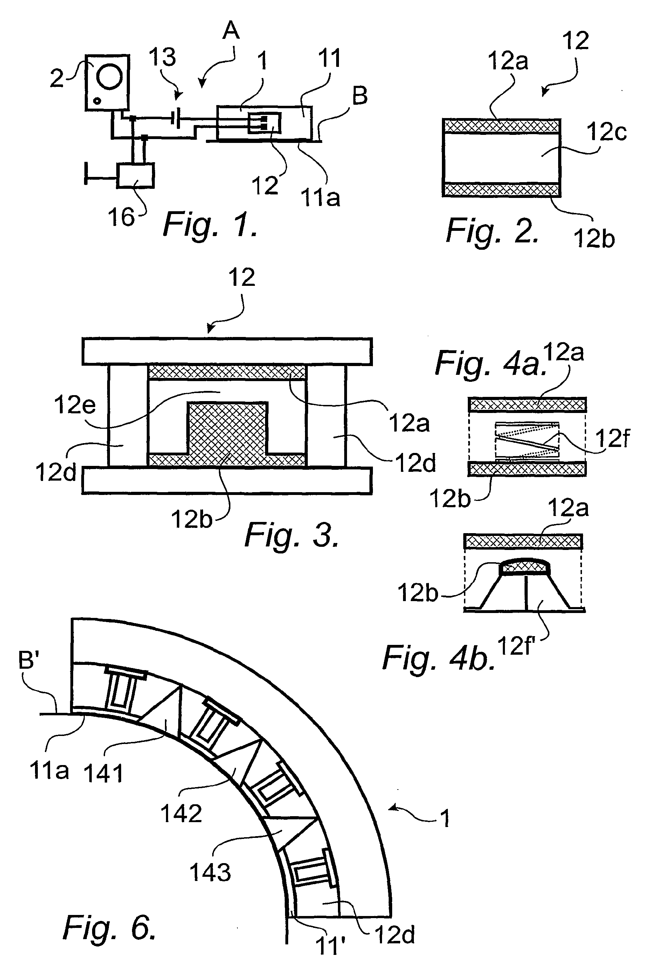

With reference to figure 1 is here showed schematically a device A for warning at physical contact of vehicles with solid objects in the environment and protection of the vehicle at such contact.

The device A comprises a detecting unit 1 and a warning unit 2, where the detecting unit 1 is adapted to be attached to a surface B and detect a contact of a vehicle against the detecting unit 1, and where the warning unit 2 is adapted to warn a driver of the vehicle at this detection.

The present invention teaches that the detecting unit 1 comprises a force absorbing plate 11, and a with the plate cooperating contact device 12.

A first side 11 a of the plate 11 is adapted to be attached to a surface B, such as a wall in a garage. The plate 11 is given an elasticity adapted to be able to absorb a part of the forces that can occur at a contact with a vehicle.

The contact device 12 is shown in the figure as being enclosed by the plate 11. It must however be understood that that the contact device also can be placed outside the plate or between the plate and the surface to which the plate is attached.

The contact device 12 is adapted to close an electric circuit 13 at a contact, and the warning unit 2 is adapted to give a visual signal and/or an acoustic signal when the electric circuit 13 is closed. It shall be understood that the electrical circuit 13 not in itself must be the circuit that powers the warning unit 2 but that it only needs to be the circuit that indicates that the detecting device 1 has been subject to a contact.

It is possible to use different types of contact devices. According to a preferred embodiment shown in figure 2 comprises the contact device an external contact surface 12a, an internal contact surface 12b, and a between those contact surfaces placed elastic material 12c that at normal pressure is electrically isolating and when it is subject to external pressure is electrically conductive. In this way a detecting unit with good elastic properties is achieved.

According to one further preferred embodiment that is shown in figure 3 the contact device 12 comprises an external contact surface 12a, an internal contact surface 12b, and an elastic or springy distance 12d, which distance is adapted to at normal pressure produce a gap 12e between the external contact surface 12a and the internal contact surface 12b. The distance 12d is adapted to be compressed when exposed to external pressure, whereby the external contact surface 12a is brought to mechanical and electrical connection with the internal contact surface 12b. In the case when the contact device 12 is completely enclosed by the plate 11 is it normal that the distance 12d is an integrated part of the plate 11.

Figure 4 shows that the external or internal contact surface 12a, 12b can be given a contact body 12f, adapted to give the contact device 12 elastic or springy properties also in the situation when the contact device 12 is closed.

The present invention indicates that the contact body 12 can be springy or elastically designed. Figure 4a shows as an example that the contact body 12f can be made of an electrically conducting spring and figure 4b shows a contact body 12f of elastic material, e.g. rubber, with the contact surface 12b positioned at the end of the contact body 12f.

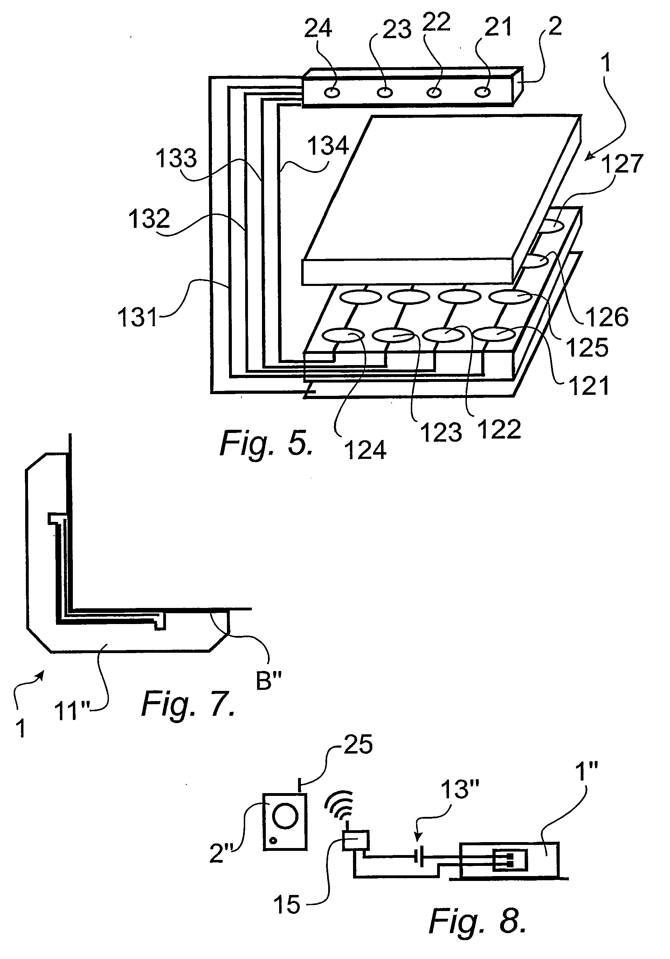

Figure 5 is made to show a preferred embodiment where the detecting unit 1 comprises a number of cooperating contact devices 121, 122, 123, 124, 125, 126,127. A number of contact bodies 121, 125, 126, 127 can be connected to each other to a common electric circuit 131. It is also possible to let a number of contact devices 121, 122, 123, 124 be positioned in a pattern, such as in a line, or a number of lines or columns, where they are electrically connected to between themselves different electrical circuits 131, 132, 133, 134 in a way that makes it possible to detect which of the contact devices that closes an electric circuit.

In this embodiment the warning unit 2 can be adapted to indicate where on the detecting device 1 a physical contact occurs by means of e.g. different light-emitting means 21, 22, 23, 24 being placed in the warning device 2 in a pattern that is according to the positions of the different contact devices 121, 122, 123, 124 in the detecting unit 1, where each light-emitting mean 21, 22, 23, 24 is adapted to give a light signal when accordingly placed contact device 121, 122, 123, 124 closes its corresponding electric circuit 131, 132, 133, 134.

Figure 6 shows that the plate 11' and all or parts of the distances 12d are given one or several, against the first side 11a directed, notches 141, 142, 143, which makes it possible to adapt the detecting unit 1 to be bent around and attached to non-flat surfaces B', such as pillars, poles or corners.

The present invention shows that the plate can be made bendable, so that the detecting unit can be adapted to be attached to non-flat surfaces, such as pillars, poles or corners in the case that a surface only diverts a little from a flat surface.

Figure 7 is meant to show an embodiment where the detecting unit 1 is adapted to be attached around a sharp corner B" by means of that the plate 11" is given angular shape.

To be able to supply a mechanical protection to vehicles that at low speed comes in contact with an inventive device A shows the present invention that the total elasticity of the detecting unit 1 shall be adapted to be able to absorb part of the forces that can occur at a contact with a vehicle, and that the warning unit 2 shall be adapted to give a warning signal at such a contact, in a way so that a driver of the vehicle can become aware of the warning signal before the forces have a damaging influence on the vehicle.

The detecting unit 1 and the warning unit 2 can communicate with each other by different means. Again referring to figure 1 a preferred embodiment is shown where the warning unit 2 stands in electrical connection with the detecting unit 1. In this case can the electrical circuit 13 that is closed by the detecting unit 1 also constitute the electrical circuit that powers the warning unit 2.

According to another preferred embodiment shown in figure 8 stands the warning unit 2" in wireless connection with the detecting unit 1", here schematically shown by radio emitter 15 and warning unit 2" adapted to receive radio signals via a receiving antenna 25. This embodiment leaves great liberty where the warning unit can be placed. E.g. in this embodiment the warning unit can be placed inside a vehicle.

The present invention is independent of how the electric circuit 13 is powered. It can however be of advantage to let the electric circuit 13 be powered by low-tension current because low-tension current can be handled by a non-professional, hence it follows that everybody can handle and mount a device according to the invention.

Figure 1 shows that the detecting device 11 as an example can be powered by a battery 13 (see also Fig.8: 13") or by main voltage through a transformer 16. It is also possible to let the battery 13 be emergency power to the main voltage 16. It must be understood that the warning unit 11 can be powered completely separate and independent of the detecting unit 12.

It will be understood that the invention is not restricted to the aforedescribed and illustrated exemplifying embodiments thereof and that modifications can be made within the scope of the inventive concept as illustrated in the accompanying Claims.

## Claims

1. A device (A) for warning for physical contact of vehicles and protection of the vehicle in case of such a contact, comprising a detecting unit (1,1") and a warning unit (2,2"), where said detecting unit (1,1") is adapted to be attached to a surface (B) and detect a contact of a vehicle with said detecting unit (1,1"), and where said warning unit (2,2") is adapted to warn a driver of said vehicle at said detection, **characterized in, that** said detecting unit (1, 1") comprises a force absorbing plate (11, 11', 11"), and a contact device (12) that is working together with said force absorbing plate (11, 11', 11"), that a first side (11a) of said plate (11, 11', 11") is adapted to be attached to said surface (B), that said plate (11, 11', 11") is given an elasticity adopted to absorb part of the forces that can occur at said contact, that said contact device (12) is adapted to close an electric circuit (13, 13") at said contact, that said warning unit (2;2") is adapted to give a visual signal and/or an acoustic signal when said electric circuit (13, 13") is closed, that the total elasticity of said detecting unit (1, 1") is adapted to be able to absorb part of the forces that can occur by said contact, and that said warning unit (2, 2") is adapted to give a warning signal at such a contact, in a way so that a driver of the vehicle can become aware of said warning signal before said forces can have a damaging influence on said vehicle.

2. A device according to claim 1, **characterized in, that** said contact device (12) comprises an external contact surface (12a), an internal contact surface (12b), and between those said contact surfaces is positioned elastic material (12c) that is electrically isolating at normal pressure and that becomes electrically conductive at external pressure.

3. A device according to claim 1, **characterized in, that** said contact device (12) comprises an external contact surface (12a), an internal contact surface (12b), and an elastic or springy distance device (12d), and that said distance device (12d) is adapted to at normal pressure keep a distance between the external and internal contact surfaces, and that said distance device is adapted to be compressed when it is subject do external force, so that an electrical contact occur between said external and internal contact surfaces.

4. A device according to claim 3, **characterized in, that** at least said external or internal contact surfaces is given a contact body (12f, 12f'), adapted to give said contact device (12) elastic or springy properties also in a situation when the contact device (12) is closed.

5. A device according to claim 4, **characterized in, that** said contact body (12f;12f') is made elastic or springy, such as an electrically conducting spring (12f) or a contact body of elastic material (12f'), with said contact surface (12b) situated at the end of said contact body.

6. A device according to any preceding claim, **characterized in, that** said detecting unit (1) is made of a number of cooperating contact devices (121...127).

7. A device according to claim 6, **characterized in, that** said contact devices (121...127) are connected to a common electrical circuit (131...134).

8. A device according to claim 6, **characterized in, that** said contact devices (121...127) are placed in a pattern, such as in a row, or more rows and columns, that said contact devices (121...127) are connected to between each other different electrical circuits (131...134) in a way that makes it possible to detect which one of said contact devices (121...127) that closes an electrical circuit, (131...134) and that said warning unit (2) is adapted to display on which place of the detecting unit (1) a physical contact occurs.

9. A device according to any one of claims 3 to 8, **characterized in, that** said plate (11') and the entire or parts of said distance is given one or more, against said first side directed, notches (141...143), through which said detecting unit (1) is adapted to be bent around and attached to non-flat surfaces, such as poles, pillars or corners.

10. A device according to any preceding claim, **characterized in, that** said plate (11') is made bendable, so that said detecting unit (1) is adapted to be attached to non-plane surfaces, such as poles, pillars or corners.

11. A device according to any preceding claim, **characterized in, that** said plate (11") is made in the shape of an angle, through which said detecting unit (1) is adapted to be attached around a corner.

12. A device according to any preceding claim, **characterized in, that** said warning unit (2) stands in electrical connection with said detecting unit (1).

13. A device according to any one of claims 1 to 11, **characterized in, that** said warning unit (2") stands in wireless connection with said detecting unit (1").

14. A device according to claim 13, **characterized in, that** said warning unit (2; 2") is placed inside a vehicle.

15. A device according to any preceding claim, **characterized in, that** said electrical circuit (13, 13") is powered by low power current, such as from a battery and/or main voltage via a transformer (16).

## Patentansprüche

1. Einrichtung (A) zur Warnung vor physischem Kontakt von Fahrzeugen und zum Schützen eines Fahrzeugs im Falle eines solchen Kontakts, umfassend eine Detektiereinheit (1; 1") und eine Warneinheit (2; 2''), wobei die Detektiereinheit (1; 1'') angepasst ist, um an einer Oberfläche (B) angebracht zu sein und einen Kontakt eines Fahrzeugs mit der Detektiereinheit (1;1") zu detektieren, und wobei die Warneinheit (2; 2") angepasst ist, um einen Fahrer des Fahrzeugs bei der Detektion zu warnen, **dadurch gekennzeichnet, dass** die Detektiereinheit (1; 1") eine Kraft absorbierende Platte (11; 11'; 11'') und eine Kontakteinrichtung (12) umfasst, die mit der Kraft absorbierenden Platte (11; 11'; 11'') zusammen arbeitet, dass eine erste Seite (11a) der Platte (11; 11'; 11") angepasst ist, um an der Oberfläche (B) befestigt zu sein, dass die Platte (11; 11'; 11'') mit einer Elastizität, versehen ist, die angepasst ist, um einen Teil der Kräfte, die bei dem Kontakt auftreten können, zu absorbieren, dass die Kontakteinrichtung (12) angepasst ist, um einen elektrischen Kreis (13; 13'') bei dem Kontakt zu schließen, dass die Warneinheit (2; 2'') angepasst ist, um ein visuelles Signal und/oder ein akustisches Signal zu geben, wenn der elektrische Kreis (13; 13'') geschlossen ist, dass die Gesamtelastizität der Detektiereinheit (1; 1'') angepasst ist, um im Stande zu sein einen Teil der Kräfte, die bei dem Kontakt auftreten können, zu absorbieren, und dass die Warneinheit (2; 2'') angepasst ist, um ein Warnsignal bei einem solchen Kontakt auf eine solche Weise zu geben, dass ein Fahrer des Fahrzeugs das Warnsignal erkennen kann, bevor die Kräfte eine schädliche Wirkung auf das Fahrzeug ausüben können.

2. Einrichtung nach Anspruch 1, **dadurch gekennzeichnet, dass** die Kontakteinrichtung (12) eine externe Kontaktoberfläche (12a), eine interne Kontaktoberfläche (12b) umfasst, und wobei zwischen den Kontaktoberflächen ein elastisches Material (12c) angeordnet ist, das bei Normaldruck elektrisch isolierend ist und bei einem externen Druck elektrisch leitfähig wird,

3. Einrichtung nach Anspruch 1, **dadurch gekennzeichnet, dass** die Kontakteinrichtung (12) eine externe Kontaktoberfläche (12a), eine interne Kontaktoberfläche (12b) und eine elastische oder federnde Abstandseinrichtung (12d) umfasst, und dass die Abstandseinrichtung (12d) angepasst ist, um bei Normaldruck einen Abstand zwischen den externen und internen Kontaktoberflächen aufrecht zu erhalten, und dass die Abstandseinrichtung angepasst ist, um komprimiert zu sein, wenn sie einer externen Kraft unterworfen wird, so dass ein elektrischer Kontakt zwischen den externen und internen Kontaktoberflächen auftritt.

4. Einrichtung nach Anspruch 3, **dadurch gekennzeichnet, dass** wenigstens die externen oder internen Kontaktoberflächen mit einem Kontaktkörper (12f; 12f') versehen sind, der angepasst ist, um der Kontakteinrichtung (12), elastische oder federnde Eigenschaften, auch in einer Situation wenn die Kontakteinrichtung (12) geschlossen ist, zu verleihen.

5. Einrichtung nach Anspruch 4, **dadurch gekennzeichnet, dass** der Kontaktkörper (12f; 12f') elastisch oder federnd gefertigt ist, wie beispielsweise eine elektrisch leitende Feder (12f) oder ein Kontaktkörper aus elastischem Material (12f'), wobei die Kontaktoberfläche (12b) an dem Ende des Kontaktkörpers angeordnet ist.

6. Einrichtung nach einem der vorhergehenden Ansprüche, **dadurch gekennzeichnet, dass** die Detektiereinheit (1) aus einer Anzahl zusammenwirkender Kontakteinrichtungen (121...127) gefertigt ist.

7. Einrichtung nach Anspruch 6, **dadurch gekennzeichnet, dass** die Kontakteinrichtungen (121...127) Zu einem gemeinsamen elektrischen Kreis verbunden sind.

8. Einrichtung nach Anspruch 6, **dadurch gekennzeichnet, dass** die Kontakteinrichtungen (121...127) in einem Muster angeordnet sind, wie beispielsweise in einer Reihe, oder in mehreren Reihen und Spalten, dass die Kontakteinrichtungen (121...127) zwischeneinander zu verschiedenen unterschiedlichen elektrischen Kreisen (131...134) auf eine Weise verbunden sind, die es ermöglicht zu Detektieren welcher der Kontakteinrichtungen (121...127) einen elektrischen Kreis (131...134) schließt, und dass die Warneinheit (2) angepasst ist, um anzuzeigen, an welchem Ort der Detektiereinheit (1) ein physischer Kontakt auftritt.

9. Einrichtung nach einem der Ansprüche 3 bis 8, **dadurch gekennzeichnet, dass** die Platte (11') und der gesamte oder Teile des Abstands mit einer oder mehreren gegen die erste Seite gerichtete Nuten versehen sind, durch welche die Detektiereinheit (1) angepasst ist, um um unebene Oberflächen, wie beispielsweise Stäbe, Säulen oder Ecken, herum gebogen und daran angebracht zu sein.

10. Einrichtung nach einem der vorhergehenden Ansprüche, **dadurch gekennzeichnet, dass** die Platte (11') biegsam gefertigt ist, so dass die Detektiereinheit (1) angepasst ist, um an unebenen Oberflächen, wie beispielsweise Stäbe, Säulen oder Ecken, angebracht zu sein.

11. Einrichtung nach einem der vorhergehenden Ansprüche, **dadurch gekennzeichnet, dass** die Platte (11') in einer Winkelgestalt gefertigt ist, durch welche die Detektiereinheit (1) angepasst ist, um um eine Ecke herum angebracht zu sein.

12. Einrichtung nach einem der vorhergehenden Ansprüche, **dadurch gekennzeichnet, dass** die Warneinheit (2) in elektrischer Verbindung mit der Detektiereinheit (1) steht.

13. Einrichtung nach einem der Ansprüche 1 bis 11, **dadurch gekennzeichnet, dass** die Warneinheit (2'') in drahtloser Verbindung mit der Detektiereinheit (1'') steht.

14. Einrichtung nach Anspruch 13, **dadurch gekennzeichnet, dass** die Warneinheit (2; 2'') in einem Fahrzeug angeordnet ist.

15. Einrichtung nach einem der vorhergehenden Ansprüche, **dadurch gekennzeichnet, dass** der elektrische Kreis (13; 13'') durch Schwachstrom betrieben wird, wie beispielsweise von einer Batterie und/oder Hauptspannung durch einen Transformator (16).

## Revendications

1. Dispositif (A) d'avertissement pour un contact physique de véhicules et de protection du véhicule dans le cas d'un tel contact, comprenant une unité de détection (1 ; 1") et une unité d'avertissement (2 ; 2"), où ladite unité de détection (1 ; 1") est conçue pour êtes fixée sur une surface (B) et détecter un contact d'un véhicule avec ladite unité de détection (1 ; 1"), et où ladite unité d'avertissement (2 ; 2") est conçue pour avertir le conducteur dudit véhicule lors de ladite détection, **caractérisé en ce que** ladite unité de détection (1 ; 1") comprend une plaque d'absorption de force (11 ; 11' ; 11") et un dispositif de contact (12) qui fonctionne avec ladite plaque d'absorption de force (11 ; 11' ; 11"), **en ce qu'**un premier côté (11 a) de ladite plaque (11 ; 11' ; 11") est conçu pour être fixé sur ladite surface (B), **en ce que** l'on donne à ladite plaque (11 ; 11' ; 11 ") une élasticité adaptée pour absorber une part à des forces qui peuvent se produire lors dudit contact, **en ce que** ledit dispositif de contact (12) est conçu pour fermer un circuit électrique (13 ; 13") au niveau dudit contact, **en ce que** ladite unité d'avertissement (2; 2") est conçue pour transmettre un signal visuel et/ou un signal acoustique lorsque ledit circuit électrique (13 ; 13") est fermé, **en ce que** l'élasticité totale de ladite unité de détection (1 ; 1") est conçue pour pouvoir absorber une partie des forces qui peuvent se produire à cause dudit contact, et **en ce que** ladite unité d'avertissement (2 ; 2") est conçue pour donner un signal d'alarme lors d'un tel contact, de manière à ce que le conducteur du véhicule puisse être averti dudit signal d'alarme avant que lesdites forces puissent avoir une influence de dommages sur ledit véhicule.

2. Dispositif selon la revendication 1, **caractérisé en ce que** ledit dispositif de contact (12) comprend une surface externe de contact (12a), une surface interne de contact (12b) et où un matériau élastique (12c) est positionné entre ces surfaces de contact , lequel est électriquement isolant à une pression normale et devient électriquement conducteur sous une pression externe

3. Dispositif selon la revendication 1, **caractérisé en ce que** ledit dispositif de contact (12) comprend une surface externe de contact (12a), une surface interne de contact (12b) et un dispositif de tenue à distance élastique ou resilient (12d), et **en ce que** ledit dispositif de tenue à distance (12d) est conçu pour maintenir une distance à la pression normale entre les surfaces de contact externe et interne et **en ce que** ledit dispositif de tenue à distance est conçu pour être comprimé lorsqu'il est soumis à une force externe de telle sorte qu'un contact électrique se produise entre lesdites surfaces de contact externe et interne.

4. Dispositif selon la revendication 3, **caractérisé en ce que** l'on donne a moins auxdites surfaces de contact externe ou interne un corps de contact 12f; 12f') conçu pour procurer audit dispositif de contact (12) des propriétés élastiques ou résilientes également lors d'une situation où le dispositif de contact (12) est fermé.

5. Dispositif selon la revendication 4, **caractérisé en ce que** ledit corps de contact (12f; 12f) est constitué d'un matériau élastique ou résilient, tel qu'ur ressort électriquement conducteur (12f) ou un corps de contact d'un matériau élastique (12f), ladite surface de contact (12b) étant située à l'extrémité dudit corps de contact.

6. Dispositif selon l'une quelconque des revendications précédentes, **caractérisé en ce que** ladite unité de détection (1) est constituée d'un certain nombre de dispositifs de contact (121 à 127) coopérants.

7. Dispositif selon la revendication 6, **caractérisé en ce que** lesdits dispositifs de contact (121 à 127) sont reliés à un circuit électrique commun (131 à 134).

8. Dispositif selon la revendication 6, **caractérisé en ce que** lesdits dispositifs de contact (121 à 127) sont placés selon un motif, tel que selon une rangée ou plusieurs rangées et colonnes, **en ce que** lesdits dispositifs de contact (121 à 127) sont reliés les uns entre les autres aux différents circuits électriques (131 à 134) d'une manière qui rend possible de détecter lequel desdits dispositifs de contact (121 à 127) ferme un circuit électrique(131 à 134), et **en ce que** ladite unité d'avertissement (2) est conçue pour afficher à quel emplacement de l'unité de détection (1) se produit un contact physique.

9. Dispositif selon l'une quelconque des revendications 3 à 8, **caractérisé en ce que** l'on donne à ladite plaque (11') et à ladite distance complète, ou à des parties de celle-ci, une ou plusieurs fois, contre ledit premier côté visé, des encoches (141 à 143) au travers desquelles ladite unité de détection (1) est conçue pour être pliée autour de surfaces non plates, telles que des tiges, des piliers ou des coins, et fixée sur celles-ci.

10. Dispositif selon l'une quelconque des revendications précédentes, **caractérisé en ce que** ladite plaque (11') est rendue pliable de telle sore que ladite unité de détection (1) est conçue pour être fixée sur des surfaces non planes, telles que des tiges, des piliers ou des coins.

11. Dispositif selon l'une quelconque des revendications précédentes, **caractérisé en ce que** ladite plaque (11") est réalisée sous la forme d un angle par l'intermédiaire duquel ladite unité de détection (1) est conçue pour est fixée autour d'un coin.

12. Dispositif selon l'une quelconque des revendications précédentes, **caractérisé en ce que** ladite unité d'avertissement (2) est en liaison électrique avec ladite unité de détection (1).

13. Dispositif selon l'une quelconque des revendications 1 à 11, **caractérisé en ce que** ladite unité d'avertissement (2") est en liaison sans fil avec ladite unité de détection (1").

14. Dispositif selon la revendication 13, **caractérisé en ce que** ladite unité d'avertissement (2 ; 2") est placée à l'intérieur d'un véhicule.

15. Dispositif selon l'une quelconque des revendications précédentes, **caractérisé en ce que** ledit circuit électrique (13; 13") est alimenté par un courant de faible puissance, tel qu'à partir d'une pile et/ou de la tension principale par l'intermédiaire d'un transformateur (16).
